# EUROPÄISCHE PATENTANMELDUNG

(11) **EP 2 657 575 A1**
(43) Veröffentlichungstag der Anmeldung: **30.10.2013**
(21) Anmeldenummer: 13165223.2
(22) Anmeldetag: 24.04.2013
(51) Int. Cl.: F16H 55/36

(54) **Keilscheibe und Antriebseinrichtung**

(30) Priorität: 25.04.2012 DE 102012008103
(71) Anmelder: Desch Antriebstechnik GmbH & Co. KG, 59759 Arnsberg (DE)
(72) Erfinder: Winlarscki, Udo, 58802 Balve (DE); Monhoff, Gerhard, 59759 Amsberg (DE)
(74) Vertreter: Brune, Axel

(57) **Zusammenfassung**

Keilscheibe, wobei die Keilscheibe eine erstes Keilscheibenelement und ein zweites Keilscheibenelement umfasst, wobei mindestens ein Dämpfungselement zwischen dem ersten Keilscheibenelement und dem zweiten Keilscheibenelement angeordnet ist, sowie Antriebseinrichtung für eine Arbeitsmaschine, wobei die Antriebseinrichtung mit einer Keilscheibe gemäß mindestens einem der Ansprüche 1 bis 6 ausgestattet ist.

## Beschreibung

Die vorliegende Erfindung betrifft eine Keilscheibe gemäß dem Oberbegriff des Anspruchs 1 , sowie eine Antriebseinrichtung gemäß dem Oberbegriff des Anspruchs 7.

Keilscheiben gehören zu den typischen Elementen eines Riementriebs. Mit Hilfe dieser Riementriebe werden Leistungen von Antriebs- zu Arbeitsmaschinen übertragen bzw. die Arbeitsmaschinen angetrieben.

Auf Grund des jeweiligen Wirkprinzip's der Antriebs- als auch der Arbeitsmaschine kann ein Antriebsstrang zu Schwingungen angeregt werden. Diese Schwingungen können schwellender als auch wechselnder Art sein. Schwingungen und/oder auch Stöße aus schwellenden oder wechselnden Belastungen können die Lebensdauer von Maschinenelementen stark reduzieren. Um diese Schwingungen zu dämpfen/minimieren werden häufig die verschiedensten Arten von elastischen Kupplungen eingesetzt. Dies sind in der Regel zusätzliche Maschinenelemente die wiederum einen gewissen Bauraum benötigen.

Hier setzt die vorliegende Erfindung an und macht es sich zur Aufgabe eine verbesserte Keilscheibe, insbesondere eine schwingungsdämpfende und kompakt bauende Keilscheibe, bereitzustellen.

Erfindungsgemäß wird diese Aufgabe durch eine Keilscheibe mit den kennzeichnenden Merkmalen des Anspruchs 1 gelöst. Mit einer derartigen Keilscheibe können Schwingungen und Stöße gedämpft bzw. minimieren werden. Gleichzeitig ist die vorgeschlagene Keilscheibe sehr kompakt.

Weitere vorteilhafte Ausgestaltungen der vorliegenden Erfindung ergeben sich insbesondere aus den Unteransprüchen. Die Merkmale der Unteransprüche können grundsätzlich beliebig miteinander kombiniert werden.

Eine weitere Aufgabe der Erfindung liegt darin, eine verbesserte Antriebseinrichtung, insbesondere eine schwingungsdämpfende und gleichzeitig kompakte Antriebseinrichtung vorzuschlagen.

Erfindungsgemäß wird diese Aufgabe durch eine Antriebseinrichtung mit den kennzeichnenden Merkmalen des Anspruchs 7 gelöst.

Weitere vorteilhafte Ausgestaltungen der vorliegenden Erfindung ergeben sich insbesondere aus den Unteransprüchen. Die Merkmale der Unteransprüche können grundsätzlich beliebig miteinander kombiniert werden.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine erfindungsgemäße Keilscheibe in einem Schnitt A-A;

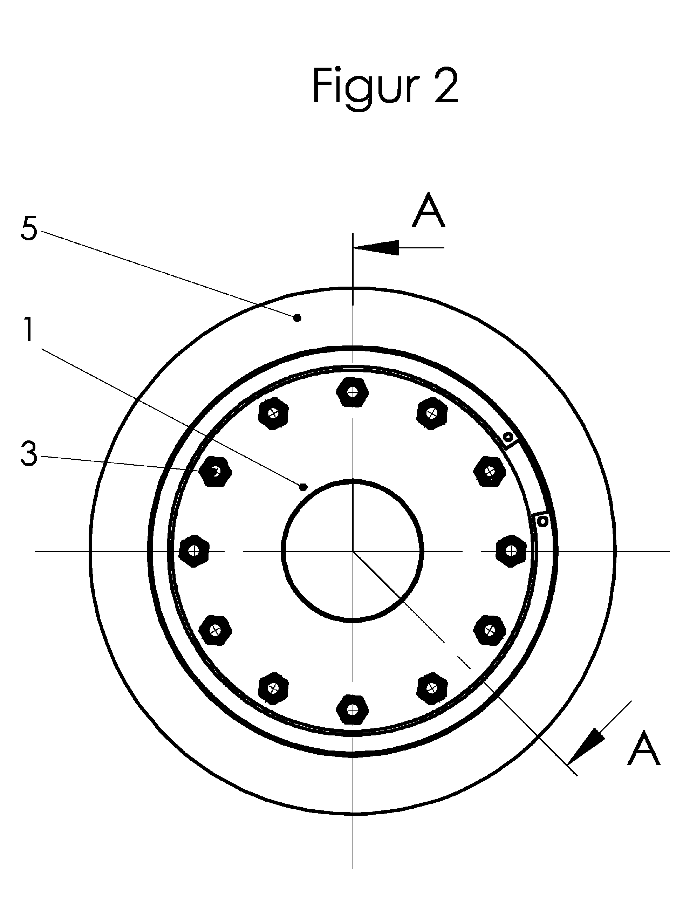

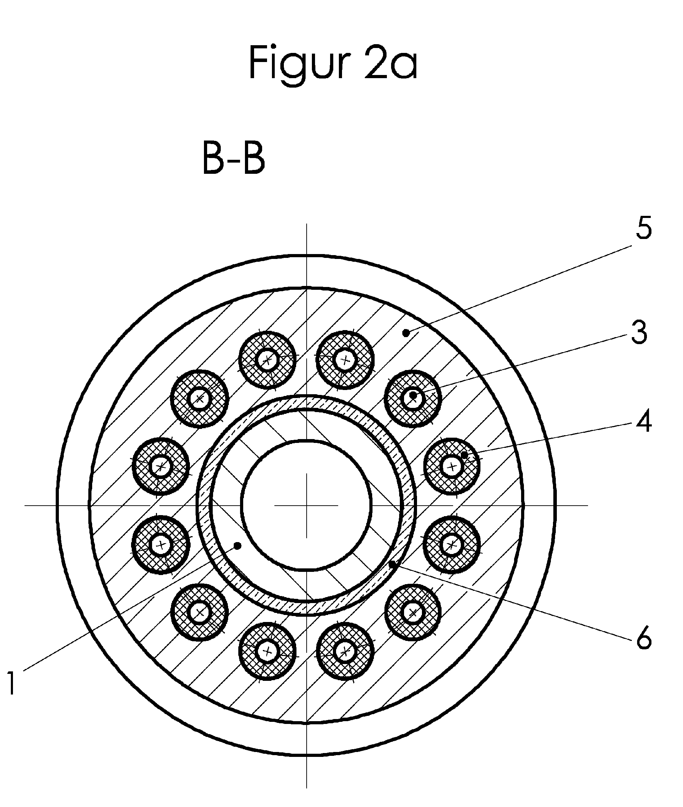

- Fig. 2: eine erfindungsgemäße Keilscheibe in einer Ansicht von vorne;
- Fig. 2a: eine erfindungsgemäße Keilscheibe in einer Ansicht von vorne in einer geschnittenen Ansicht;
- Fig. 3: eine erfindungsgemäße Antriebseinrichtung mit einer erfindungsgemäßen Keilscheibe.

Folgende Bezugszeichen werden in den Zeichnungen verwendet:
- K: Keilscheibe
- W: Wechselhülse
- G: Getriebeabgangswelle
- H: Eingangswelle Hydraulikpumpe
- 1: Nabe
- 2: Schrumpfscheibe
- 3: Bolzen
- 4: Dämpfungselement
- 5: Keilscheibenzylinder
- 6: Gleitlager
- 7: Gleitlager
- 8: Ausnehmung, insbesondere zylindrische Bohrung

Eine erfindungsgemäße Keilscheibe umfasst im Wesentlichen ein erstes Keilscheibenelement, ein zweites Keilscheibenelement und mindestens ein Dämpfungselement 4, vorzugsweise eine Anzahl von Dämpfungselementen 4, welche zwischen dem ersten Keilscheibenelement und dem zweiten Keilscheibenelement angeordnet sind.

Das erste Keilscheibenelement ist vorzugsweise als Nabe 1 ausgebildet. Das zweite Keilscheibenelement ist vorzugsweise als Keilscheibenzylinder 5 ausgebildet. Die Nabe 1 ist vorzugsweise zumindest abschnittsweise, insbesondere vollständig, in dem Keilscheibenzylinder 5 aufgenommen.

Ferner kann eine erfindungsgemäße Keilscheibe eine Schrumpfscheibe 2, einen oder mehrere Bolzen 3 und ein oder mehrere Gleitlager 6, 7 umfassen.

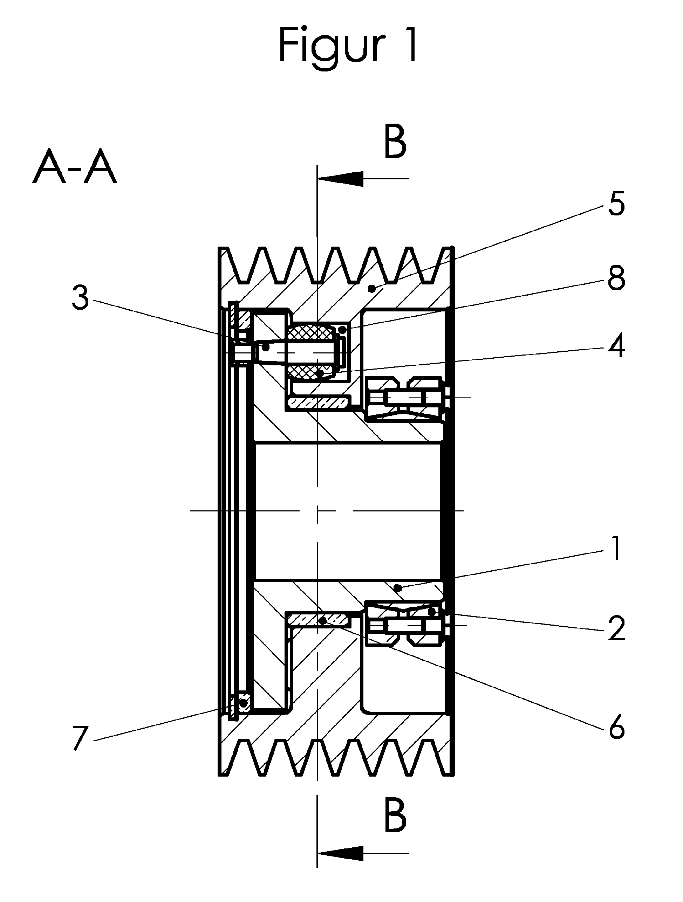

In Figur 1 ist eine "elastische Keilscheibe" mit integrierten Dämpfungselementen 4 gezeigt.

Bei den Dämpfungselementen handelt es sich um elastische Elemente, insbesondere zumindest abschnittsweise aus Kunststoff, vorzugsweise aus Nitrilkautschuk (NBR / Nitrile Butadiene Rubber). Die Dämpfungselemente 4 weisen vorzugsweise einen kreisrunden, zylinderförmigen, insbesondere hohlzylinderförmigen, Querschnitt auf.

Grundsätzlich ist die Keilscheibe dazu eingerichtet, dass ein Drehmoment zwischen dem ersten Keilscheibenelement und dem zweiten Keilscheibenelement über das mindestens eine Dämpfungselement übertragen werden kann. Mit Hilfe der erfindungsgemäßen Keilscheibe mit den Dämpfungselementen 4, kann die Übertragung von unerwünschten mechanischen Schwingungen, die beispielsweise schwellender als auch wechselnder Art sein können, gedämpft bzw. minimiert werden.

Die "elastische Keilscheibe" kann mit ihrer Nabe 1 auf eine Welle bzw. Wellenende aufgeschoben werden. Befestigt werden kann sie entweder, wie gezeigt, mit einer Schrumpfscheibe 2 oder aber auch mit jeder anderen Wellen-Naben- Verbindung. Der Drehmomentenfluß erfolgt von dem ersten Keilscheibenelement, insbesondere der Nabe 1, auf die Bolzen 3, über die Dämpfungselemente 4 auf das zweite Keilscheibenelement, insbesondere der äußere Keilscheibenzylinder 5. Der Drehmomentfluss kann selbstverständlich auch vice versa erfolgen.

Die beiden Bauteile 6 und 7 dienen als Gleitlager um den Keilscheibenzylinder 5 auf der Nabe 1 axial als auch radial zu fixieren. Sie übertragen die Radialkräfte aus dem Riementrieb über den äußeren Keilscheibenzylinder 5 und dem Gleitlager 6 auf die Nabe 1 und somit auf die Welle und deren Lagerung. Die Dämpfungselemente 4 verringern Schwingungen und Stöße im Antriebsstrang. Die gezeigte Lösung kombiniert eine Keilscheibe mit einer elastischen Kupplung ohne den Bauraum der Keilscheibe auszuweiten.

Es sind eine Anzahl von Dämpfungselementen 4 vorgesehen, die in Umfangsrichtung der Nabe 1 angeordnet sind. Die Dämpfungselemente 4 sind mittels Bolzen 3 mit der Nabe verbunden. Die Dämpfungselemente 4 sind wiederum in Ausnehmungen, insbesondere zylindrischen Bohrungen 8 aufgenommen, insbesondere jedes Dämpfungselement 4 ist in einer zugeordneten Ausnehmung, insbesondere zylindrischen Bohrung 8, aufgenommen. Die Dämpfungselemente 4, als auch die Bolzen 3 erstrecken sich vorzugsweise in axialer Richtung der Keilscheibe. In dem hier gezeigten Beispiel sind zwölf einzelne Bolzen 3 und Dämpfungselemente 4 aus elastischem Kunststoff, sowie entsprechend zwölf einzelne Ausnehmungen 8 vorgesehen. Hier ist auch eine andere Anzahl denkbar.

Eine erfindungsgemäße Antriebseinrichtung umfasst im Wesentlichen ein Antriebsmittel, beispielsweise einen Dieselmotor, ein Getriebe mit mindestens einem Abtrieb, vorzugsweise ein Getriebe mit mindestens zwei Abtrieben, wobei der Abtrieb, der beispielsweise als Getriebeabgangswelle ausgestaltet sein kann, mit einer erfindungsgemäßen Keilscheibe ausgestattet ist.

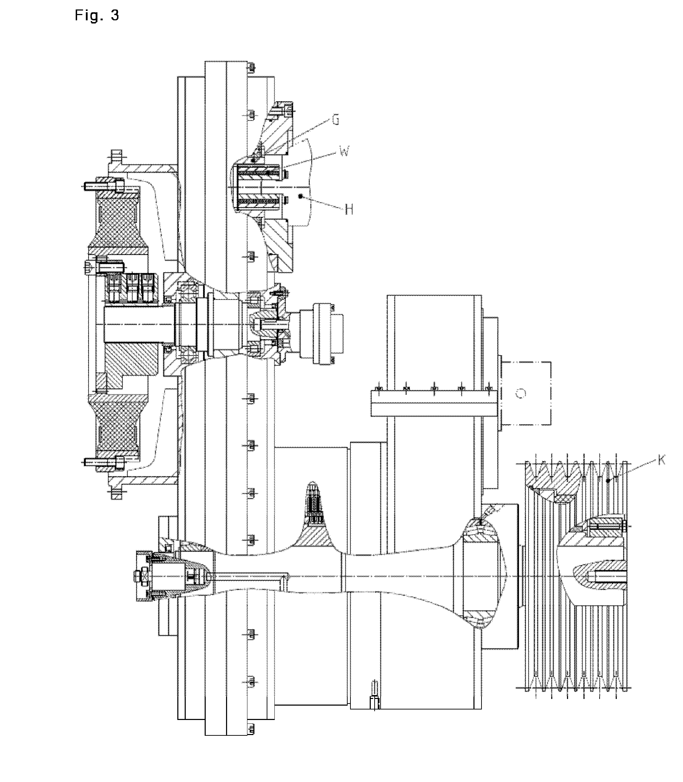

Fig. 3 zeigt die erfindungsgemäße Keilscheibe K in einer Antriebseinrichtung, die wiederum Teil einer Arbeitsmaschine sein kann. Als Arbeitsmaschine kommt beispielsweise eine Baumaschine, insbesondere ein Brecher in Frage.

## Patentansprüche

1. Keilscheibe (K), **dadurch gekennzeichnet, dass** die Keilscheibe eine erstes Keilscheibenelement und ein zweites Keilscheibenelement umfasst, wobei mindestens ein Dämpfungselement zwischen dem ersten Keilscheibenelement und dem zweiten Keilscheibenelement angeordnet ist.

2. Keilscheibe nach Anspruch 1, **dadurch gekennzeichnet, dass** das erste Keilscheibenelement als Nabe (1) und das zweite Keilscheibenelement als Keilscheibenzylinder (5) ausgestaltet ist.

3. Keilscheibe nach mindestens einem der vorhergehenden Ansprüche, **dadurch gekennzeichnet, dass** die Nabe (1) zumindest abschnittsweise, vorzugsweise vollständig, in dem Keilscheibenzylinder (5) aufgenommen ist.

4. Keilscheibe nach mindestens einem der vorhergehenden Ansprüche, **dadurch gekennzeichnet, dass** das Dämpfungselement zumindest abschnittsweise als zylinderförmiges, vorzugsweise hohlzylinderzylinderförmiges, elastisches Element, ausgestaltet ist.

5. Keilscheibe nach mindestens einem der vorhergehenden Ansprüche, **dadurch gekennzeichnet, dass** das Dämpfungselement zumindest abschnittsweise aus Kunststoff, vorzugsweise aus Nitrilkautschuk (NBR / Nitrile Butadiene Rubber) ausgestaltet ist.

6. Keilscheibe nach mindestens einem der vorhergehenden Ansprüche, **dadurch gekennzeichnet, dass** eine Anzahl von Dämpfungselementen vorgesehen sind, die in Umfangsrichtung des ersten Dampfungselementes, insbesondere der Nabe (1), angeordnet sind und in Ausnehmungen (8), insbesondere zylindrischen Bohrungen, des zweiten Keilscheibenelementes, insbesondere dem Keilscheibenzylinder (5), aufgenommen sind.

7. Antriebseinrichtung für eine Arbeitsmaschine, **dadurch gekennzeichnet, dass** die Antriebseinrichtung mit einer Keilscheibe gemäß mindestens einem der Ansprüche 1 bis 6 ausgestattet ist.

8. Antriebseinrichtung nach Anspruch 7, **dadurch gekennzeichnet, dass** die Antriebseinrichtung ein Antriebsmittel, beispielsweise einen Dieselmotor, ein Getriebe mit mindestens einem Abtrieb, vorzugsweise ein Getriebe mit mindestens zwei Abtrieben, umfasst, wobei mindestens ein Abtrieb, der beispielsweise als Getriebeabgangswelle ausgestaltet sein kann, mit der Keilscheibe (K) ausgestattet ist.
